# EUROPEAN PATENT APPLICATION

(11) **EP 2 141 140 A1**
(43) Date of publication of application: **06.01.2010**
(21) Application number: 08159660.3
(22) Date of filing: 03.07.2008
(51) Int. Cl.: C04B 38/06, B01D 39/20, B01J 35/00, B01J 37/02

(54) **Ceramic foams with gradient of porosity and gradient of catalytic active(s) phase(s)**

(71) Applicant: L'AIR LIQUIDE, Société Anonyme pour l'Etude et l'Exploitation des Procédés Georges Claude, 75007 Paris (FR); Centre National de la Recherche Scientifique, 75794 Paris Cedex 16 (FR); Université de Limoges, 87032 Limoges (FR)
(72) Inventor: Del-Gallo, Pascal, 91410 Dourdan (FR); Gary, Daniel, 78180, Montigny le Bretronneux (FR); Chartier, Thierry, 87220 Feytiat (FR); Cornillac, Mathieu, 78470, St Rémy les Chevreuse (FR); Faure, Raphael, 87065 Limoges Cedex (FR); Rossignol, Fabrice, 87430 Verneuil sur Vienne (FR)
(74) Representative: Conan, Philippe Claude

(57) **Abstract**

Architecture comprising ceramic or metallic foam, **characterized in that** the foam has at least one continuous and/or discontinuous, axial and/or radial porosity gradient ranging from 10 to 90% associated to a pore size from 2 ppi to 60 ppi, at least one continuous and/or discontinuous, axial and/or radial concentration of catalytic active(s) phase(s) from 0.01wt% to 100wt%, preferentially from 0.1 to 20wt.%, and in that the architecture has a microstructure comprising specific area ranging between 0.1 to 30 m²/g, a grain size between 100 nm and 20 microns and a skeleton densification above 95%.

## Description

The invention relates to an architecture comprising a ceramic or a metallic foam, **characterized in that** the foam has at least one continuous and/or discontinuous, axial and/or radial porosity gradient ranging from 10 to 90% associated to a pore size range from 2 to 60 ppi, at least one continuous and/or discontinuous, axial and/or radial concentration gradient of catalytic active(s) phase(s) from 0.01wt% to 100wt% preferentially from 0.1wt% to 20wt%, and in that the architecture has a microstructure comprising a specific area ranging between 0,1 to 30 m²/g, a grain size between 100 nm and 20 microns and a skeleton densification above 95%.

One process to obtain an architecture as taught by the invention can be based on the preparation of a ceramic foam support with a continuous and/or discontinuous axial and/or radial porosity gradient comprising: choosing at least one polymeric sponge, impregnating the polymeric sponge by a ceramic slurry, drying of the impregnated sponge, pyrolysing the organics including the polymeric sponge, and sintering, and **characterized in that** we realize a pre-step to obtain a continuous and/or discontinuous axial and/or radial porosity gradient and an additional step of formation of continuous and/or discontinuous, axial and/or radial concentration gradients of catalytic active(s) phase(s) on the ceramic foam support.

Porous ceramics have physical-chemical properties, whether thermal stability, chemical stability, bio-compatibility or mechanical strength, which make them good candidates for various applications such as filter membranes, sensors, ceramic-to-metal seals, biomaterials, energy conservation, thermal insulation or catalysis. These materials are used in particular for their low density, their high exchange area and their high permeability thanks to their open porosity.

As techniques for creating porosity in a ceramic, there are:
- uncomplete sintering of ceramic particles;
- introduction of porosity by an emulsion of the material before sintering;
- use of pore formers removed before sintering;
- forming operations such as extrusion, injection molding, rapid prototyping; and
- the use of ceramic fibers.

These methods are listed in Roy W.Rice, "Porosity of ceramics", Marcel Dekker, 1998, pp 20-21.

The use of pore formers, removed for example by pyrolysis before sintering, and leaving pores as the negative thereof in the ceramic, is one of the most appropriate methods for producing materials whose porosity is controlled in terms of volume fraction, shape and size distribution of the pores. Incorporating particulate pore formers, such as starch, lattices, graphite or resins into ceramic suspensions or slurries makes it possible to obtain uniformly distributed open pores in a dense ceramic matrix. Depending on the forming method - pressing, casting in a mold, tape casting, extrusion or injection molding - a material is obtained with a plane geometry, a tubular geometry or a geometry of more complex shape.

Several embodiments of this technique of incorporating pore-forming particles into a ceramic suspension are disclosed in United States patents published under the numbers US 4,777,153, US 4,883,497, US 5,762,737, US 5,846,664 et US 5,902,429 and in the publications by Lykfeldt et al. and Apté et al. (O. Lyckfeldt, E.Liden, R.Carlsson, "Processing of thermal insulation materials with controlled porosity", Low Expansion Materials, pp 217-229; S. F. Corbin, P.S. Apté, J.Am.Ceram.Soc, 82, 7, 1999, pp 1693-1701). Apté et al. describe in particular a method using the tape casting of ceramic suspensions containing pore-forming particles and the thermo-compression of the tapes in order to obtain, after sintering, a porous material with a discrete porosity gradient.

US 4, 780, 437 discloses a method for preparing thin porous materials by infiltration of a flocking of pyrolyzable pore-forming fibers by a ceramic suspension. The materials obtained by this method have oriented anisotropic pores.

FR 2,817,860 discloses a method for preparing a thin ceramic material with controlled surface porosity gradient, including (A) infiltrating a porous pore-forming substrate of controlled thickness, with a ceramic suspension; (B) evaporating the solvent; (C) a step which includes eliminating the pore-forming agents and the various organic additives, and (D) a sintering step.

On the other hand, FR 2,817,860 teaches that the infiltration of polymer foams by a ceramic suspension is used to obtain bulk ceramics having a substantial open porosity. The preparation of ceramic foam by impregnation of polymeric foams by ceramic slurries was first described in US 3,090,094. This technique has been widely explored since this date to manufacture open-celled ceramic foams, mainly used in filtration devices. Other application concerns the fabrication of refractory materials or the manufacture of porous catalyst supports.

In the case of heterogeneous catalytic reactors (especially for endothermic reactions such as steam reforming, dry reforming, etc), the temperature of the bed has a direct influence on the performances of the process. The yield is directly linked to the temperature of the catalytic bed. Consequently, an optimized heat transfer (in such a way that heat losses are minimized inside the catalytic bed) from the wall of the vessel to the core of the catalytic bed is required.

The problem can also be considered from another side: the temperature within the catalytic bed can be controlled by the reactivity of said bed (for exothermic and endothermic reactions).

So, a problem is to provide an architecture allowing a good heat transfer.

A solution of the present invention is an architecture comprising ceramic or metallic foam, **characterized in that** the foam has at least one continuous and/or discontinuous, axial and/or radial porosity gradient ranging from 10 to 90% associated to a pore size from 2 ppi to 60 ppi, at least one continuous and/or discontinuous, axial and/or radial concentration of catalytic active(s) phase(s) from 0.01wt% to 100wt%, preferentially from 0.1 to 20wt.%, and in that the architecture has a microstructure comprising specific area ranging between 0.1 to 30 m²/g, a grain size between 100 nm and 20 microns and a skeleton densification above 95%.

Preferably, the architecture is in itself a catalytic active bed, but it may also be a support on which an active catalytic layer may be deposited.

Another embodiment of the present invention is a process for the preparation of a ceramic foam having at least one continuous and/or discontinuous, axial and/or radial porosity gradient ranging from 10 to 90% associated to a pore size from 2 ppi to 60 ppi, at least one continuous and/or discontinuous, axial and/or radial concentration gradient of catalytic active(s) phase(s) from 0.01wt% to 100wt%, preferentially from 0.1wt% to 20wt%, comprising the following successive steps:
a) Choosing at least one polymeric sponge, with a continuous and/or discontinuous porosity gradient ranging from 10 to 90%, associated to a pore size from 2 ppi to 60 ppi.
b) Preparing the ceramic slurry with ceramic particles, solvent and at least an organic and/or inorganic additive,
c) Impregnation of the polymeric sponge of the step a) by the ceramic slurry of the step b),
d) Drying of the impregnated polymeric sponge,
e) Pyrolysing the organic compounds including the dried polymeric sponge, and
f) Sintering the ceramic particles after the step e),
**characterized in that** a pre-step of formation of a porosity gradient on the sponge is introduced before the step a), and provided that if the polymeric sponge of step a) does not have a porosity gradient, the pre-step is compulsory, and in that an additional step of formation of a concentration gradient of catalytic active(s) phase(s) on the ceramic foam is introduced.

According to particular embodiments of the present invention, the process is characterized by the following characteristics:
- the pre-step is chosen among:
   ■ thermo-compressing one edge of the polymeric sponge to induce a higher deformation of a given part of the sponge; or
   ■ piling up sponges with different porosities; or
   ■ stacking sponges cylinders with different porosity, the inner cylinders being joined to the outer ones;
- the additional step is chosen among:
   ■ Piling up after the step c) at least two sponges which have been impregnated respectively with two ceramic slurries having different concentration of catalytic active(s) phase(s); or
   ■ Impregnation of the polymeric sponge at step c) by at least two ceramic slurries having different concentrations of actives species at different height and/or at different radius of polymeric sponge; or
   ■ Control during the step b) the slurry properties of the ceramic slurry versus the gravity phenomenon; or
   ■ Stacking after the step f) at least two sponges cylinders which have been impregnated respectively with two ceramic slurries;
- the polymeric sponge is in a material selected among poly(urethane), poly(vinyl chloride), polystyrene, cellulose and latex, preferably in poly(urethane);
- ceramic particles have a size between 100 nm and 10 microns and that the ceramic slurry contains up to 60 vol.% of ceramic particles;
- after the step c) the impregnated foam can be compressed, centrifuged or passed through rollers;
- the ceramic particles are oxide-based materials selected among or a mixture of: alumina (Al₂O₃) and/or doped-alumina (La(1 to 20 wt.%)-Al₂O₃, Ce-(1 to 20 wt.%)-Al₂O₃, Zr(1 to 20 wt.%)-Al₂O₃), magnesia (MgO), spinel (MgAl₂O₄), hydrotalcite, CaO, zinc oxide, cordierite, mullite, aluminum titanate, and zircon (ZrSiO₄);
- the ceramic particles are non-oxide-based materials selected among or a mixture of : silicon carbide (SiC), silicon nitride (Si₃N₄), SiMeAlON materials where Me is a metal such Y and La;
- the ceramic particles_are in a ionic conductive oxide selected among Ceria (CeO₂), Zirconia (ZrO₂), stabilized ceria (Gd₂O₃ between 3 and 10 mol% in zirconia) and zirconia (Y₂O₃ between 3 and 10 mol% in zirconia) and mixed oxides of the formula (I):

   Ce₍₁₋ₓ₎ Zrₓ O_{(2-δ)} (I),

   wherein 0 < x < 1 and δ ensures the electrical neutrality of the oxide,
   or doped mixed oxides of the formula (II):

   Ce_{(1-x-y)} Zrₓ D_{y} O_{2-δ} (II),

   wherein D is selected from Magnesium (Mg), Yttrium (Y), Strontium (Sr), Lanthanum (La), Presidium (Pr), Samarium (Sm), Gadolinium (Gd), Erbium (Er) or Ytterbium (Yb); wherein 0 < x < 1, 0< y <0;5 and δ ensures the electrical neutrality of the oxide.
- the ceramic particles includes an catalytic active phase based selected from Ruthenium (Ru), Rhodium (Rh), Palladium (Pd), Rhenium (Re), Osmium (Os), Iridium (Ir) Platinum (Pt) or combinations thereof;
- the ceramic particles includes an catalytic active phase based selected from Nickel (Ni), Cobalt (Co), Copper (Cu), Iron (Fe), Chromium (Cr) and/or noble metal(s) selected from Rh, Pt, Pd, or combinations thereof.

In fact, in the case of a foam used as a stand alone catalytic active support for the catalytic reactions to proceed, the ceramic particles (raw matter) can be:
- ionic conductive oxides including noble metal(s) Me selected from Ru, Rh, Pd, Re, Os, Ir, Pt or combinations thereof, or
- Hydrotalcite based on transition metal(s) Me selected from Ni, Co, Cu, Fe, Cr and/or noble metal(s) (selected from Rh, Pt, Pd), or combinations thereof, or
- alumina (NiₓAl₂₋ₓO₃) or spinel (NiₓMg₁₋ₓAl₂O₄) based on transition metals (Nickel (Ni), Cobalt (Co), Copper (Cu), Iron (Fe), Chromium (Cr)).

In the case of a foam used as a support hosting a catalytic layer for the catalytic reactions to proceed, the ceramic particles (raw matter) can be oxide-based material(s) non active and active (ionic conductive oxides) or non-oxide-based material(s).

Another embodiment of the present invention is a ceramic foam with a longitudinal and/or radial, continuous and/or discontinuous porosity gradient and a longitudinal and/or radial, continuous and/or discontinuous concentration gradient of catalytic active(s) phase(s) obtainable by the process according to the invention.

Another embodiment of the present invention is a metallic foam with longitudinal and/or radial continuous and/or discontinuous porosity gradient and a longitudinal and/or radial, continuous and/or discontinuous concentration gradient of catalytic active(s) phase(s).

Another embodiment of the present invention is the use of the ceramic or metallic foam according to the invention in heterogeneous catalysis.

Preferably, ceramic or metallic foam is used as a catalytic active bed in hydrocarbons Steam Reforming, hydrocarbons catalytic partial oxidation or hydrocarbons dry reforming, or as a catalytic active bed in methanol production, methanol transformations, or oxidative reactions.

Foams have been widely studied since a few decades. Several papers reporting their advantage over conventional powder bed and extruded-supported catalysts were recently reviewed (M.V. Twigg, J.T. Richardson, Industrial and Engineering Chemistry Research 46 (2007) 4166-4177). It has been demonstrated that a higher turbulence of the stream was created through foams causing higher mass and temperature transfer (J.T. Richardson, Y. Peng, D. Remue, Applied Catalysis A: General 204 (2000) 19-32) and lower pressure drop (J.T. Richardson, D. Remue, J.K. Hung, Applied Catalysis A: General 250 (2003) 319-329) compared to powder beds and honey-combs supported catalysts. The high porosity of open-cell foams is the most significant property, which direct consequence is a much lower pressure drop inside the reactor.( M.V. Twigg, J.T. Richardson, Chemical Engineering Research and Design 80 (2002) 183-189) Such characteristics are also found in monolithic structures with uniform, parallel channels with respect to honey-combs monoliths. However such materials have laminar flow patterns without lateral mixing between cells, whereas foams have extensive pore tortuosity that enhances turbulence, mixing and transport. Such ceramic foams are currently prepared by slurry impregnation of a sponge-like template. US 3,090,094 first reports a method of producing ceramic foams by impregnation of sponge like templates. US 4,810,685 reports the manufacture of a steam reforming catalyst made of ceramic foam pellets. WO 01/60525 A2 reports the use of reticulated ceramic foams for synthesis gas production, from partial oxidation of light hydrocarbons. US 4,810,685 and 4,863,712 reports the use of foam-supported catalysts to perform methane steam reforming reaction. The foams were used as pellets.

The denomination 'Porous ceramics' generally refers both to open-cell and closed cell ceramics. Ceramic foams can be defined as highly porous open-cell ceramic materials. They can be either produced by direct foaming of ceramic slurry, by impregnation of an organic template or by using pore formers that leave pores once burst.

The polymeric sponge is the template that is duplicated by impregnation of a ceramic slurry. The pore-size of the sponge determines the pore size of the final product after firing (between 2 ppi and 60 ppi). Different polymeric materials can be used as templates (basically: poly(urethane) (PU), poly(vinyl chloride) (PVC), poly(styrene) (PS), cellulose, latex) but the choice of the ideal sponge is limited by severe requirements. The polymeric sponge must be elastic enough to recover it initial shape without being irreversibly deformed after being compressed during the impregnation process. It should have at least a few hydrophobic/hydrophilic interactions with the slurry solvent to retain the slurry. It should volatilize at low temperature, below that required to sinter the ceramics. However the 'softening' temperature must be high enough not to favour the collapsing of the structure during the pyrolysis/sintering step. As the organic template is pyrolysed, it must not released toxic compounds; for instance PVC is avoided because HCl is released during pyrolysis.

PU foams are commercially available in a large range of porosity at low costs. It is smooth enough to be deformed and recover its initial shape after impregnation. It is also strong enough to keep its original shape once impregnated. Different kinds of PU exist, named ester-type, ether-type, or ether-ester-type, owing to the nature of the lateral chain of the polyol polymerised with the isocyanate. Even if the polymer is globally hydrophobic, the lateral chains confer hydrophilic (ester) or hydrophobic (ether) properties to the polymer. It has to be noted that NOx are released during the pyrolysis.

Any other foam (except PS) is not really commercially available. And PS is not smooth enough to be compressed during the impregnation step.

PU foams are today the most commonly used polymeric templates to produce ceramic foams. However, in some specific cases, pre-ceramic sponge-like polymers, such as poly(silanes) and poly(carbosilanes), can be used to prepare specific ceramic foams, such as silicon carbide foams.

Wettability measurements of alumina slurries on PU foams was recently reported. Different PU foams (ether-type, ester-type, ester/ether-type) compositions were used (J. Luyten, I. Thijs, W. Vandermeulen, S. Mullens, B. Wallaeys, R. Mortelmans, Advances in Applied Ceramics 104 (2005) 4-8).

As the evaluation of wetting by contact angles measurements on felted PU sheets (PU foams compressed at 180-200°C into plate or sheet) failed, direct observation of the coating with stereomicroscopy was used. It was reported that only hydrophilic ester-type PU foam gives improved wetting. To a lower extent, the use of wetting agent was investigated, and great improvement of the coating ability was noted. Finally, modifications of the PU foams were also reported to highly improve the coating by the slurry, and so to increase the final strength of the impregnated ceramic foam. PU foams were treated by first bathing for 24h in 1M NaOH solution, to enhance the surface coarseness, followed by treating with a silica sol to modify the template surface from an hydrophobic to an hydrophilic nature.

After having chosen the template, the preparation of the ceramic slurry is the next key step of the processing of ceramic foams.

The ceramic slurry is made of finely divided and homogeneously distributed ceramic particles, solvent(s) and additives. The choice of any of these components is important in the formulation of the slurry.

The slurry also withstands severe requirements. The slurry must be fluid enough to impregnate the template but it must also be viscous enough once impregnated to be retained on the template. The ceramic particles must be homogeneously dispersed in the slurry. The size of the particles must be fine enough to favour the sintering process. But if the particles are too small, vermicular porosity can be developed. Ideal size for sintering is generally closed to a few microns.

The slurries contain very variable volume fractions of particles, that can reach up to 60vol%. Slurries become more and more viscous for higher ceramic particles contents, leading to an increase slurry loading on the template.

In order to improve the formulation of the slurry regarding the quality of the washcoat, additives (dispersants, binders, rheological agents, antifoaming agents, wetting-agents, flocculating agents and air-setting agents) can be used. Different additives can be added to the ceramic particles and to the solvent, in order to:
- stabilize the suspension,
- favour a uniform coating of the template,
- increase the adhesion of the slurry on the template, and
- let the foam-cells open after the slurry-coating of the template.

Binders strengthen the ceramic structure after drying and prevent the foam from collapsing during the pyrolysis of the organic sponge. Different kinds of binders are used: organics (poly(ethylene)oxide, poly(vinyl)alcool, gelatine) and inorganics (potassium or sodium silicates, aluminium orthophosphate, magnesium orthoborate).

Organic binders are advantageously eliminated from the sintered ceramic material, whereas inorganic binders stay in/on the material.

Inorganic binders were the first to be used in slurry formulations for impregnation of polymeric sponges. The binders used were potassium or sodium silicate, aluminium orthophosphate or inorganic gels, such as alumina hydrates or silica hydrates.

Today most commonly used binders are organic binders such as gelatine, poly(ethylene)oxide or poly(vinyl)alcool. The beneficial effect of poly(ethylene)oxide (average molecular weight = 100 000) on the coherent and homogeneous coating of a poly(urethane) foam has been reported to be optimum at around 1 wt% of the powder amount, for alumina slurries.

Poly(ethylene)oxide and poly(vinyl)alcohol could also have a role in the rheological behaviour of the slurries. But generally the rheology of the slurries is controlled by the use of rheological agents.

The slurry must be fluid enough to enter in the organic sponge and must be viscous enough once coated on the support not to drain out of the sponge. Such thixotropic properties can be brought to the slurry by rheological agents, which can be different from binders. Once again, inorganic or organic rheological agents can be used, with the same advantage for the organic ones as mentioned before.

Inorganic rheological agents generally used to promote thixotropy are bentonite and kaolin clays. These agents are added typically in the amount 0,1 to 12wt% of the total weight of the slurry. Other agents were also tested: zinc oxide and calcium oxide also appeared to lead to a thixotropic behaviour.

Organic rheological agents, such as carboxymethylcellulose, were used in various amounts to enhance the coating of some mullite slurries on PU foams.

Anti-foaming agents are added to prevent the slurry from foaming (example: BYK348 by BYK-Chemie). During the successive impregnation/compression to impregnate the polymeric sponge and to expulse the slurry excess, bridges or windows appear. They are hard to remove, especially when the slurry dry easily, and lead to semi-closed cells.

Impregnation of organic templates is an easy process, as the template is smooth enough to be compressed. Several impregnations can be required if the slurry coverage is insufficient to cover the template or if strong ceramic foams (with increased struts-width) are prepared. But problems appear when several impregnations are required: once impregnated and dried, the foam becomes hard and compressions lead to cracks in the first dried impregnation. To reduce the number of required impregnation, the wettability of the slurry on the template must be improved. To do so, we can either decide to modify the support (as previously seen for PU templates), or to modify the slurry formulation by adding wetting agents.

The wetting agents allow increasing the hydrophobic interactions between the support and the slurry, thus leading to increase slurry loading from the first impregnation.

Floculating agents can be added to the slurry formulation. Local flocculation of the ceramic particles by the addition of poly(ethyleneimine) (0,005wt% to 1 wt%) results in improved adherence of the slurry on the polyurethane template.

Air-setting agents are used to consolidate the ceramic slurry impregnated prior to sintering. The resulting increased cohesion of the coating prevents from creation of cracks during handling, and from the collapse of the foam while the PU template is pyrolysed. The most commonly used setting agents are aluminum orthophosphate, aluminum hydroxychloride and magnesium orthoborate.

Agglomerates could appear when the colloidal ceramic suspensions used for the impregnation of the PU foams are not stable, leading to non uniform coatings. Dispersing agents are added to the slurry to stabilise the suspension by helping in dispersing the ceramic particles, preventing them from agglomeration. Generally, ceramic suspensions can be dispersed by electrostatic, steric or electrosteric stabilisation mechanisms. Electrostatic stabilisation is achieved by generating a common surface charge on the particles. Steric stabilisation is achieved by adsorption of polymers on the particle surface.

Finally, electrosteric stabilisation requires the presence of both polymers adsorbed on the particle surface and of electrical double layer repulsion. Optimum sodium poly(methacrylate) PMAA-Na adsorption on α-alumina particles and zero point of charge on its surface were studied following the pH of the slurries. Following the pH, the fraction of dissociated PMAA-O-Na (charged groups) and non-dissociated PMAA-OH varies, changing the average charge on the particles surface. Then, at a given pH, the stability of a suspension corresponds to the adsorption limit of the PMAA on the alumina particles. Moreover, the more concentrated the slurry (powder loading), the more reduced pH range, for stabilizing the slurry. Of course, the amount of dispersing agent adsorbed will vary owing to the specific surface area of the powder dispersed. Thus, pH and specific surface area of powders have to be taken into account to optimize the use of dispersing agents.

Once the polymeric template has been chosen and the ceramic slurry has been prepared, the next step is the impregnation of the template with the ceramic slurry.
Typically, total impregnation of the polymeric template is achieved by compressing the foam, expulsing the air inside, and immersing it into the slurry. Then the foam is allowed to expend. Once immersed in the slurry, several compressions could be required, especially if the slurry is too viscous. No specific requirements are attached to this step.

Another key step of the preparation of ceramic foams is coming then: after being impregnated, it is required to expulse the excess of slurry from the polymeric sponge, to leave the cells open. Even if this can be done by manually pressing the foam, reproducibility and large scale production required the development of several processes dedicated to achieve this step. Several methods are reported.

The impregnated foam can be:
- compressed between to boards,
- centrifuged,
- passed through rollers
- blown by air or any other carrier gas jets whatever their temperature

The method using boards rapidly appeared to be limited. The centrifugation process is really efficient to manufacture small samples, but it becomes impossible to produce large samples, as the centrifugation apparatus size is limited. Rollers can be used without limits of sample-size. The compression strength imposed by the rollers on the impregnated foam allows regulating the amount of slurry expulsed and redistributing the slurry within the polymeric foam webs. Weighting of the foam and calculation of the wt% loading (mass of the slurry coated per mass unit of the polymeric sponge) are then parameters to optimize.

Once impregnated, the foam is dried to evaporate the solvent and to leave a dense coating on the polymeric sponge, made of organics (additives) and ceramic particles physically bounded together. No specific cares have to be taken, except in the temperature (when dried in oven). A specific attention has to be paid to regulate the humidity and temperature profiles to prevent from cracking. The typical temperature range is between 40 to 80°C with a humidity decreasing down to zero. However it has to be noted that cracks could appear during the drying process. Shrinkage of the slurry upon drying (while the PU template remains fixed) could cause cracks of the coating. In the case of soft PU foams, the modulus is very low, about 0,045 GPa, and so it should offer little resistance to the shrinkage of the coating.

Once dried, the green ceramic foam must be pyrolysed to remove the organics, including the PU template.

The final step of the ceramic foam processing is the sintering of the ceramic particles that have been previously coated on the template. The exact temperature, time and atmosphere depend on the starting ceramic material and on the desired final propertied (the raw material grain size, initial specific surface area, surface properties...). A typical sintering temperature for sintering a submicron alumina with a densification above 95% is typically 1600°C for 2 hours.

The foam-supported catalyst can be designed in such a way that the concentration of catalytic active(s) phase(s) contained in the catalytic layer coated on the metallic or the ceramic foam can be controlled along the radial and/or longitudinal directions towards the gas flow. As a result, the reactivity of the reaction will be controlled along the catalytic bed, thus controlling the temperature gradient.

The foam can be designed in such a way that its porosity can be controlled along the radial and/or longitudinal directions towards the gas flow. As a result, the turbulence and the catalytic activity can be controlled throughout the global volume of the reactor.
Figure 1a shows a ceramic foam with an axial discontinuous porosity gradient and with an axial discontinuous concentration gradient of catalysts: the porosity of the section (a) is different of the porosity of the section (a'), which is different of the porosity of the section (a") and 10% < a, a',a''< 90%, and the concentration of catalytic active(s) phase(s) of the section (a) is different of the concentration of the section (a'), which is different of the concentration of the section (a") and 0.01wt% < a, a',a''< 100wt%, preferentially 0.1 wt% < a, a',a''< 20wt%.
Figure 1b shows a ceramic foam with a radial discontinuous porosity gradient and with an radial discontinuous concentration gradient of catalytic active(s) phase(s): the porosity of the section (a) is different of the porosity of the section (b), which is different of the porosity of the section (c) and 10% < a, b, c < 90% and the concentration of catalytic active(s) phase(s) of the section (a) is different of the concentration of the section (b), which is different of the concentration of the section (c) and 0.01wt% < a, b, c < 100wt%, preferentially 0.1wt% < a, b,c< 20wt%.

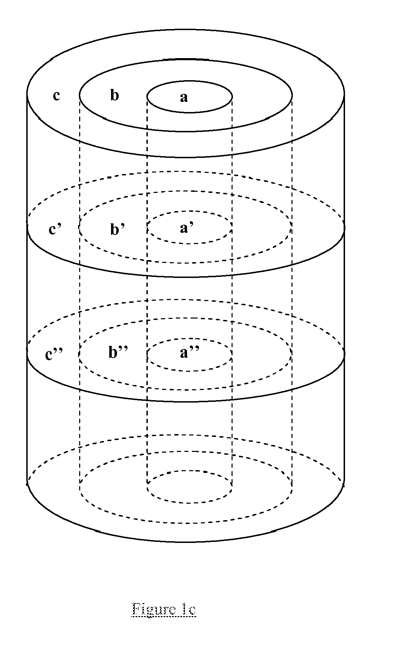

Figure 1c shows a ceramic foam with an axial discontinuous porosity gradient and with an axial and a radial discontinuous concentration gradient of catalytic active(s) phase(s): the porosity of the section (a) is different of the porosity of the section (a'), which is different of the porosity of the section (a") and 10% < a, a',a''< 90%, and the porosity of the section (a) is different of the porosity of the section (b), which is different of the porosity of the section (c) and 10% < a, b, c < 90%; and the concentration of catalytic active(s) phase(s) of the section (a) is different of the concentration of catalytic active(s) phase(s) of the section (a'), which is different of the concentration of catalytic active(s) phase(s) of the section (a") and 0.01wt% < a,a',a''< 100wt%, preferentially from 0.1wt% < a, a',a''< 20wt%, and the concentration of catalytic active(s) phase(s) of the section (a) is different of the concentration of catalytic active(s) phase(s) of the section (b), which is different of the concentration of catalytic active(s) phase(s) of the section (c) and 0.01wt% < a, b, c < 100wt% preferentially 0.1wt% < a, b, c < 20wt%.

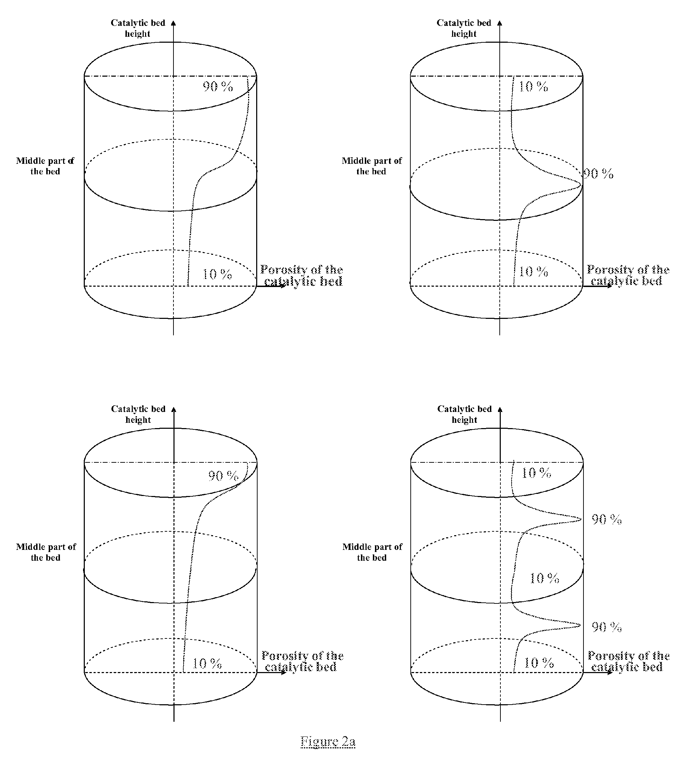

Figure 2a shows a ceramic foam with an axial continuous porosity gradient.

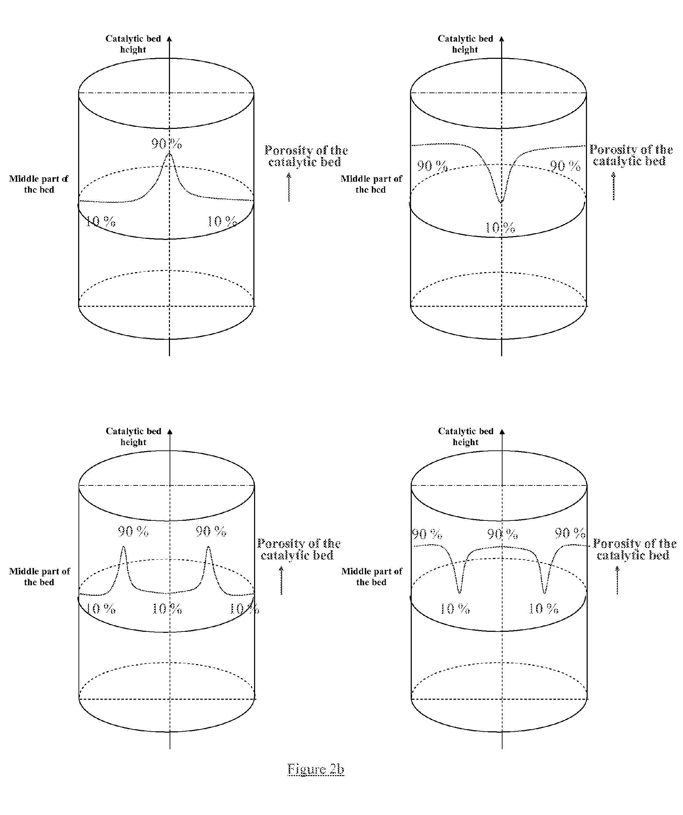

Figure 2b shows a ceramic foam with an radial continuous porosity gradient.

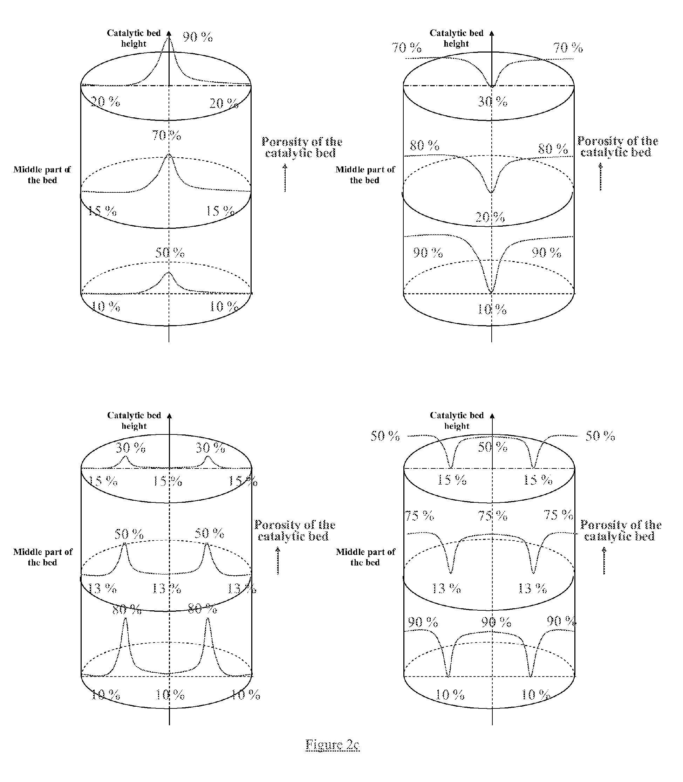

Figure 2c shows a ceramic foam with an axial continuous porosity gradient and an radial continuous porosity gradient.

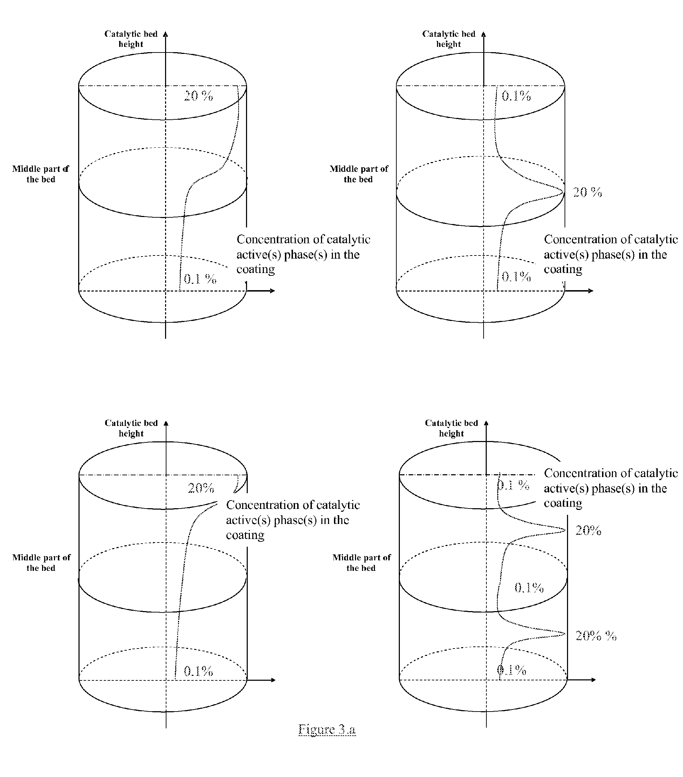

Figure 3a shows a ceramic foam with an axial continuous concentration gradient of catalytic active(s) phase(s).

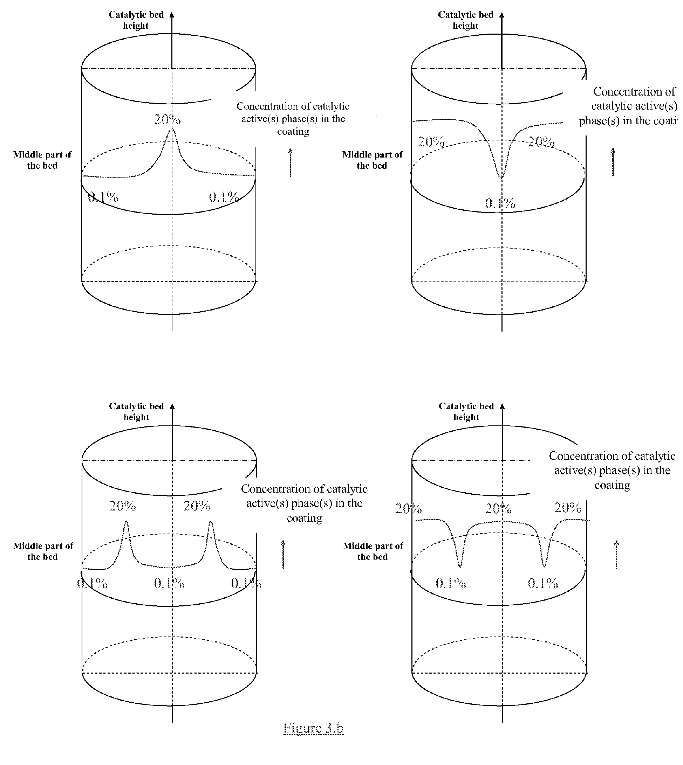

Figure 3b shows a ceramic foam with an radial continuous concentration gradient of catalytic active(s) phase(s).

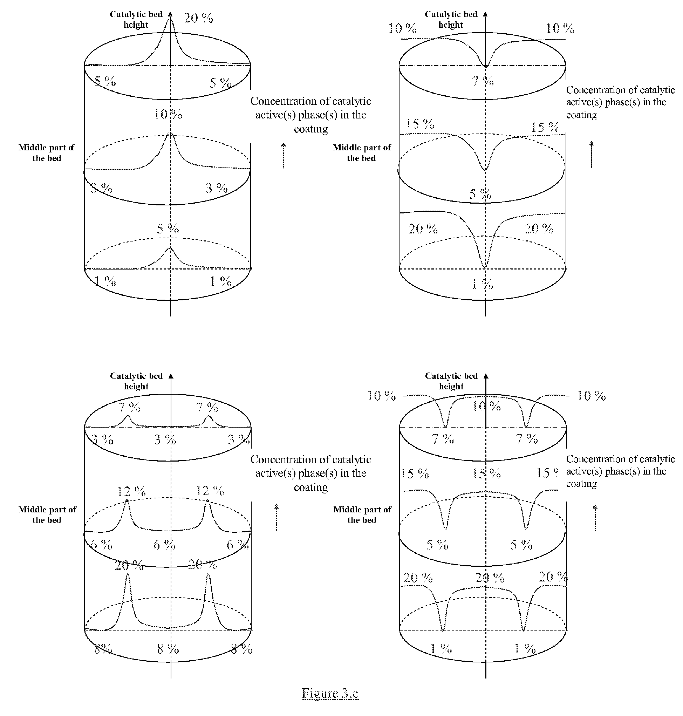

Figure 3c shows a ceramic foam with an axial continuous concentration gradient of catalytic active(s) phase(s) and an radial continuous concentration gradient of catalytic active(s) phase(s).

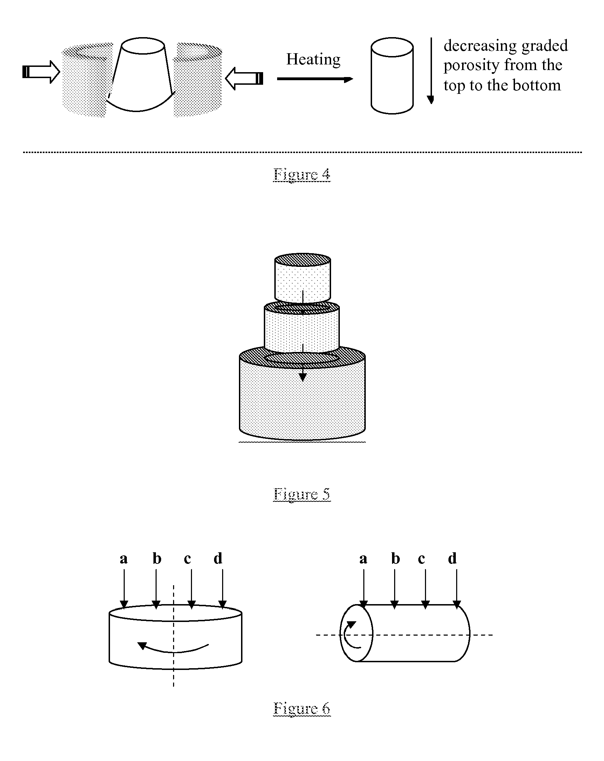

Such porosity gradients can be processed by different strategies detailed thereafter.
- To obtain a discontinuous axial porosity gradients within the catalytic bed, it is possible to :
   ○ prepare ceramic foams by slurry impregnation of templates presenting a discontinuous porosity gradient. Such template can be polymeric foam with pre-existing discontinuous porosity gradient, or a pore-making agent (e.g. polymeric spheres) made of sacrificial particles of different sizes and/or heterogeneous volume distribution.
   ○ pile up ceramic foams with different porosities.
- To obtain a discontinuous radial porosity gradient, it is possible to:
   ○ embed concentric ceramic foam cylinders with different porosity, the inner cylinders being joined to the outer ones (figure 5).
   ○ slurry-impregnate a sponge-like template with a discontinuous radial porosity gradient. Polymeric foam templates can be used to do so. Such polymeric template with a discontinuous radial porosity gradient can be produced by polymerization of polymer precursors. Another solution to produce porosity-graded templates consists in embedding sponge-like concentric polymeric cylinders with different porosities, inducing a discontinuous porosity gradient.
- To obtain a continuous longitudinal gradient, it is possible to slurry-impregnate a sponge-like template exhibiting a longitudinal and/or axial continuous porosity. Polymeric foam templates can be used to do so. Such polymeric template with a longitudinal and/or axial continuous porosity gradient may be produced by polymerization of polymer precursors. Another solution to produce porosity-graded templates consists in thermo-compressing one edge of the polymeric foam to induce a higher deformation of a given part of the foam, inducing a continuous porosity gradient (figure 4).
- To obtain a continuous radial porosity gradient, it is possible to slurry impregnate a sponge-like template with a continuous radial porosity gradient. Polymeric foams templates can be used to do so. Such polymeric template with a continuous radial porosity gradient may be produced by polymerization of polymer precursors.

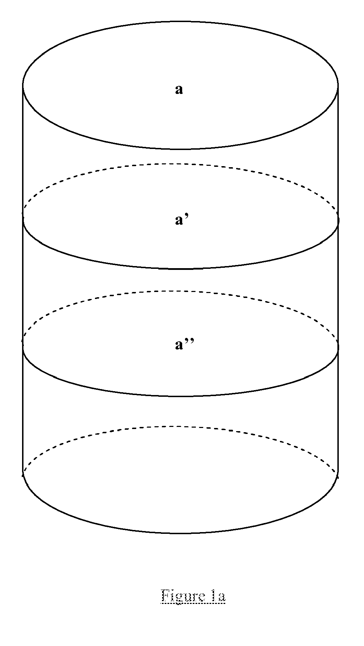

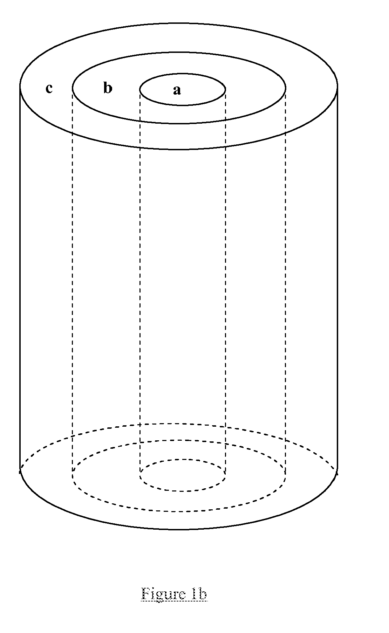

Such concentration gradients of the active layer can be processed by different strategies detailed therafter (figures 1a, 1b any 1c):
- To obtain a discontinuous longitudinal concentration gradient of catalytic active(s) phase(s), it is possible to:
   ○ pile-up sponges which have been impregnated with ceramic slurries having different concentration of actives species,
   ○ coat polymeric sponge with catalyst slurries containing various amounts of catalytic active(s) phase(s) (Figure 6). Catalyst slurries can be poured on the ceramic foam, passing through the pores and coating the foam struts. By pouring slurries with different catalytic active(s) phase(s) loading at different height of the ceramic foam, a concentration gradient of catalytic active(s) phase(s) can be obtained.
- To obtain a discontinuous radial concentration gradient of catalytic active(s) phase(s), it is possible to:
   ○ stack sponges cylinders which have been impregnated with ceramic slurries having different concentration of actives species (Figure 5),
   ○ coat polymeric sponge with catalyst slurries containing various amounts of catalytic active(s) phase(s) (Figure 6). Catalyst slurries can be poured on the ceramic foam, passing through the pores and coating the foam struts. By pouring slurries with different catalytic active(s) phase(s) loading at different radius of the ceramic foam, a concentration gradient of catalytic active(s) phase(s) can be obtained.
- To obtain a continuous longitudinal or radial concentration gradient of catalytic active(s) phase(s), it is possible to:
   ○ control the slurry properties (particle dispersion, stability of the dispersion, flocculation, rheology) of the catalytic suspension versus the gravity phenomenon. Several continuous coatings can be done to control the concentration of catalytic active(s) phase(s) deposited on the metal or ceramic foam support.

The reactions may be exothermic or endothermic.

In the case of an endothermic catalytic reaction (Steam reforming or dry reforming), the heat transfer from the vessel (tubular reactor wall) to the catalytic bed is a key point for the improvement of this process. It is essential to forward as fast as possible the heat necessary for the reaction. In this case, there is not any problem of selectivity linked to the temperature. By consequence, the heat transfer must be the best as possible on all the height of the tube to allow a decrease of the height or an increase of the flow rate (the reaction yield). The porosity axial gradient can solve this problem.

Most of the time, when the catalytic bed is homogeneously loaded in terms of catalytic active(s) phase(s) concentration, the reaction mainly occurs in the top area of the bed.

This higher reactivity of the top area of the bed have a direct consequence on the temperature along the bed: the heat is mainly consumed where the reaction is occurring, inducing a decrease of the temperature in the head of the reactor. In another hand, most of the feed have already reacted once arrived at the lowest part of the reactor, thus the heat is not consumed, leading to overheating of the catalyst located in this area. The overheated catalyst is generally irreversibly damaged as ceramic and metals particles sinter. The present invention reports a method to prevent such temperature gradient by the regulating the reactivity of the catalyst along the catalytic bed, its height and/or its width.

In addition, to prevent possible bypass between the foam and the tube, an increase of the turbulence provided by the foam specific architecture can be a solution. This increase of the turbulence may result of a control of the architecture of the catalytic foam, for instance the number of ppi (pore per inch) along the radial direction.

In the case of an exothermic catalytic reaction (methanol production, methanol transformation, hydrogen production by catalytic partial oxidation, oxidative reaction, Fisher-Tropsch, etc), the heat transfer from the catalytic bed to the vessel is a key point for the stability of the process. A temperature increase of the catalytic bed due to the exothermic reaction and the low efficiency of the heat transfer, induces drop of product selectivity and process lifetime. By consequence, the heat transfer must be favoured on all the height of the tube. The specific architecture of the foam, especially the turbulence generation can favour the heat transfer from the catalytic bed to the vessel.

## Claims

1. Architecture comprising ceramic or metallic foam, **characterized in that** the foam has at least one continuous and/or discontinuous, axial and/or radial porosity gradient ranging from 10 to 90% associated to a pore size from 2 ppi to 60 ppi, at least one continuous and/or discontinuous, axial and/or radial concentration of catalytic active(s) phase(s) from 0.01wt% to 100wt%, preferentially from 0.1 to 20wt.%, and **in that** the architecture has a microstructure comprising specific area ranging between 0.1 to 30 m²/g, a grain size between 100 nm and 20 microns and a skeleton densification above 95%.

2. Architecture according to claim 1, **characterized in that** the architecture is in itself a catalytic active bed or a support on which an active catalytic phase layer may be deposited.

3. Process for the preparation of a ceramic foam having at least one continuous and/or discontinuous, axial and/or radial porosity gradient ranging from 10 to 90% associated to a pore size from 2 ppi to 60 ppi, at least one continuous and/or discontinuous, axial and/or radial concentration gradient of catalytic active(s) phase(s) from 0.01wt% to 100wt%, preferentially from 0.1wt% to 20wt%, comprising the following successive steps:
a) Choosing at least one polymeric sponge, with a continuous and/or discontinuous porosity gradient ranging from 10 to 90%, associated to a pore size from 2 ppi to 60 ppi.
b) Preparing the ceramic slurry with ceramic particles, solvent and at least an organic and/or inorganic additive,
c) Impregnation of the polymeric sponge of the step a) by the ceramic slurry of the step b),
d) Drying of the impregnated polymeric sponge,
e) Pyrolysing the organic compounds including the dried polymeric sponge, and
f) Sintering the ceramic particles after the step e),
**characterized in that** a pre-step of formation of a porosity gradient on the sponge is
introduced before the step a), and provided that if the polymeric sponge of step a) does not have a porosity gradient, the pre-step is compulsory, and **in that** an additional step of formation of a concentration gradient of catalytic active(s) phase(s) on the ceramic foam is introduced.

4. Process according to claim 3, **characterized in that** the pre-step is chosen among:
■ thermo-compressing one edge of the polymeric sponge to induce a higher deformation of a given part of the sponge; or
■ piling up sponges with different porosities; or
■ stacking sponges cylinders with different porosity, the inner cylinders being joined to the outer ones.

5. Process according to one of claims 3 or 4, **characterized in that** the additional step is chosen among:
■ Piling up after the step c) at least two sponges which have been impregnated respectively with two ceramic slurries having different concentration of catalytic active(s) phase(s); or
■ Impregnation of the polymeric sponge at step c) by at least two ceramic slurries having different concentrations of actives species at different height and/or at different radius of polymeric sponge; or
■ Control during the step b) the slurry properties of the ceramic slurry versus the gravity phenomenon; or
■ Stacking after the step f) at least two sponges cylinders which have been impregnated respectively with two ceramic slurries.

6. Process according to one of claims 3 to 5, **characterized in that** the polymeric sponge is in a material selected among poly(urethane), poly(vinyl chloride), polystyrene, cellulose and latex, preferably in poly(urethane).

7. Process according to one of claims 3 to 6, **characterized in that** ceramic particles have a size between 100 nm and 10 microns and that the ceramic slurry contains up to 60 vol.% of ceramic particles.

8. Process according to one of claims 3 to 7, **characterized in that** after the step c) the impregnated foam can be compressed, centrifuged or passed through rollers.

9. Process according to one of claims 3 to 8, **characterized in that** the ceramic particles are oxide-based materials selected among or a mixture of: alumina (Al₂O₃) and/or doped-alumina (La(1 to 20 wt.%)-Al₂O₃, Ce-(1 to 20 wt.%)-Al₂O₃, Zr(1 to 20 wt.%)-Al₂O₃), magnesia (MgO), spinel (MgAl₂O₄), hydrotalcite, CaO, zinc oxide, cordierite, mullite, aluminum titanate, and zircon (ZrSiO₄).

10. Process according to one of claims 3 to 8, **characterized in that** the ceramic particles are non-oxide-based materials selected among or a mixture of : silicon carbide (SiC), silicon nitride (Si₃N₄), SiMeAlON materials where Me is a metal such Y and La.

11. Process according to one of claims 3 to 9, **characterized in that** the ceramic particles are in a ionic conductive oxide selected among Ceria (CeO₂), Zirconia (ZrO₂), stabilized ceria (Gd₂O₃ between 3 and 10 mol% in zirconia) and zirconia (Y₂O₃ between 3 and 10 mol% in zirconia) and mixed oxides of the formula (I):
Ce₍₁₋ₓ₎ Zrₓ O_{(2-δ)} (I),
wherein 0 < x < 1 and δ ensures the electrical neutrality of the oxide,
or doped mixed oxides of the formula (II):
Ce_{(1-x-y)} Zrₓ Dy O_{2-δ} (II),
wherein D is selected from Magnesium (Mg), Yttrium (Y), Strontium (Sr), Lanthanum (La), Presidium (Pr), Samarium (Sm), Gadolinium (Gd), Erbium (Er) or Ytterbium (Yb); wherein 0 < x < 1, 0< y <0;5 and δ ensures the electrical neutrality of the oxide.

12. Process according to claim 11, **characterized in that** the ceramic particles includes an catalytic active phase based selected from Ruthenium (Ru), Rhodium (Rh), Palladium (Pd), Rhenium (Re), Osmium (Os), Iridium (Ir) Platinum (Pt) or combinations thereof

13. Process according to claim 9, **characterized in that** the ceramic particles includes an catalytic active phase based selected from Nickel (Ni), Cobalt (Co), Copper (Cu), Iron (Fe), Chromium (Cr) and/or noble metal(s) selected from Rh, Pt, Pd, or combinations thereof.

14. Ceramic foam with a longitudinal and/or radial, continuous and/or discontinuous porosity gradient and a longitudinal and/or radial, continuous and/or discontinuous concentration gradient of catalytic active(s) phase(s) obtainable by the process according to one of claims 3 to 13.

15. Metallic foam with longitudinal and/or radial continuous and/or discontinuous porosity gradient and a longitudinal and/or radial, continuous and/or discontinuous concentration gradient of catalytic active(s) phase(s).

16. Use of the ceramic or metallic foam according to claim 14 or claim 15 in heterogeneous catalysis.

17. Use of ceramic or metallic foam according to claim 14 or claim 15, as a catalytic active bed in hydrocarbons Steam Reforming, hydrocarbons catalytic partial oxidation, hydrocarbons dry reforming, water-gas-shift reaction, methanol production, methanol transformations, or oxidative reactions.
